# EUROPÄISCHE PATENTSCHRIFT

(11) **EP 1 418 347 B1**
(45) Veröffentlichungstag und Bekanntmachung des Hinweises auf die Patenterteilung: **23.04.2008**
(21) Anmeldenummer: 03025126.8
(22) Anmeldetag: 03.11.2003
(51) Int. Cl.: F16B 35/04

(54) **Verfahren zur Herstellung einer Schraube zur einstellbaren Abstandsmontage**
Method for manufacturing a screw for adjustable spaced mounting
Méthode de fabrication d'une vis pour montage à écartement réglable

(30) Priorität: 06.11.2002 DE 10252494
(43) Veröffentlichungstag der Anmeldung: 12.05.2004
(73) Patentinhaber: Adolf Würth GmbH & Co. KG, 74653 Künzelsau (DE)
(72) Erfinder: Wunderlich, Andreas, 74635 Kupferzell (DE); Weidner, Bernd, 74653 Ingelfingen (DE)
(74) Vertreter: Patentanwälte Ruff, Wilhelm, Beier, Dauster & Partner

(56) Entgegenhaltungen:
- EP-A- 1 180 606
- DE-A- 3 715 420
- DE-U- 29 504 559
- DE-U- 29 704 452

## Beschreibung

Die Erfindung betrifft die Herstellung einer Schraube, mit deren Hilfe Bauteile mit einstellbarem Abstand vor oder unter einer Tragkonstruktion angebracht werden können.

Es ist bereits eine Senkkopfschraube zum Befestigen von hölzernen Unterkonstruktionsteilen für Verkleidungen auf tragenden Bauteilen mit unebenen Oberflächen bekannt (G 8403242). Diese Schraube weist unterhalb ihres Senkkopfs einen Bereich mit drei umlaufenden im Querschnitt sägezahnförmigen Rippen auf. Der Abschnitt mit den Rippen weist etwa den gleichen Durchmesser auf wie der Schaft mit dem Gewinde. Zur Herstellung muss der Bereich mit den Rillen aufgestaucht werden. Dies ist aber nur auf eine bestimmte Länge möglich, da bei längeren Abschnitten der Draht seitlich weg knicken würde.

Ebenfalls bekannt ist eine Schraube zum Befestigen von Latten, bei der auf den Schaft ein mit äußeren Rippen versehenes Drehteil aufgesetzt und durch einen Bund gegen axiales Verschieben gesichert wird (DE 3333055). Diese Hülse verdeckt beim Härten den Schaft teilweise. Dadurch wird der Schaft beim Härten gegenüber dem restlichen Teil der Schraube nicht so schnell abgeschreckt, was zu einer geringeren Härte in diesem Bereich führt. Dies verringert also das Bruchdrehmoment an einer Stelle, wo die Schraube weniger hart ist.

Durch den Spalt zwischen der Hülse und dem Schaft können ggf. während des Verzinkens Reste der verschiedenen Bäder austreten, was zu Verschleppungen in den einzelnen Bädern und danach zu Flecken führen kann.

Ebenfalls bekannt ist eine Schraube, die im Bereich ihres äußeren Endes einen Abschnitt mit vergrößertem Durchmesser und einem Gewinde aufweist. Das Gewinde kann die gleiche oder eine größere Steigung aufweisen, als der vordere Abschnitt des Schraubenschafts. Die Schraube hat keinen Kopf, so dass sie durch ein zu befestigendes Bauteil hindurchgeschraubt werden kann (DE-B-1137197).

Bei einer nochmals weiteren Schraube (DE-U1-29504559) weist der Schaft unterhalb des Kopfes eine drehfeste Muffe mit umlaufenden Rippen auf. Auch hier stellt sich das Problem nicht nur der Herstellung, sondern auch der Härtung, da diese Schraube für Beton und Mauerwerk bestimmt ist.

Bei einer weiteren bekannten Befestigungsschraube wird auf den Schaft in dem Bereich unterhalb des Schraubenkopfes ein mit einer Außenprofilierung ausgebildetes Halteglied aus Kunststoff aufgebracht. Zur Axialsicherung enthält der Schaft rippenartige Vorsprünge, die in entsprechende Nuten des Halteglieds eingreifen (DE 3540413).

Bei einer weiteren Schraube dieser Art (DE 29704452) sind an einem Schaftstück der Schraube mit vergrößertem Durchmesser umlaufende Rippen gebildet. Diese sind aber nicht zum Eingriff in das zu befestigende Bauteil bestimmt oder gedacht, sondern zum Zusammenwirken mit einem Klemmstück ausgebildet, das in das Bauteil eingesetzt wird. Es handelt sich also wieder um ein zweiteiliges Befestigungselement.

Zur Herstellung einer Schraube mit zwei Gewindeabschnitten unterschiedlichen Durchmessers ist es bekannt, an einem Drahtstück zunächst den Schraubenkopf auszubilden und dieses Drahtstück dann mit einem zweiten Drahtstück zu verschweißen. Ausgangspunkt sind also zwei später zu verbindende Drahtstücke (EP 1180606).

Der Erfindung liegt die Aufgabe zu Grunde, ein Verfahren zur Herstellung einer Befestigungsschraube zu schaffen, die bei einfachem und kostengünstigem Aufbau die Möglichkeit bietet, die Befestigung mit wenigen Arbeitsvorgängen durchführen zu können.

Zur Lösung dieser Aufgabe schlägt die Erfindung ein Verfahren mit den im Anspruch 1 genannten Merkmalen vor. Weiterbildungen der Erfindung sind Gegenstand von dem Unteranspruch 2.

Auf Grund des unterhalb des Schraubenkopfes angeordneten Abschnitts mit vergrößertem Durchmesser ist es möglich, durch das zu befestigende Bauteil mit einem Bohrer hindurch zu bohren, und dabei das für die Aufnahme des Dübels bestimmte Loch in dem Untergrund zu bohren. Dann kann der Dübel durch das Loch des zu befestigenden Bauteils hindurch in den Untergrund eingesteckt und anschließend die Schraube eingeschraubt werden. Es ist also nicht mehr erforderlich, wie bei dem an erster Stelle genannten Befestigungsmittel, zunächst ein Loch für den Dübel zu bohren und anschließend ein kleineres Loch für die Schraube.

Dieser Art der Befestigung ist zwar bei den beiden anderen im Stand der Technik bekannten Schrauben schon möglich, jedoch sind diese Schrauben aus zwei Teilen zusammengesetzt, was einen erhöhten Herstellungsaufwand bedeutet

Es kann vorgesehen sein, dass der Durchmesser des Halteabschnitts den Nennmaß eines für die Schraube bestimmten Dübels entspricht. Es ist üblich, dass Dübel und Schrauben aufeinander abgestimmt sind. Für eine Schraube mit einem bestimmten Nennmaß wird ein Dübel eines bestimmten Nennmaßes verwendet, wobei auch umgekehrt gesagt werden kann, dass zu einem Dübel eines bestimmten Nennmaßes eine bestimmte Schraube gehört. Der unterhalb des Schraubenkopfes angeordnete Halteabschnitt wird so dimensioniert, dass der Durchmesser des Dübellochs und der Durchmesser des Lochs im Bauteil, in das der Halteabschnitt eingreifen soll, gleich groß sind.

Unter Schraubenkopf ist im übrigen nicht zu verstehen, dass die Schraube unbedingt einen gegenüber dem Durchmesser vorspringenden Kopf aufweisen muss. Unter Schraubenkopf ist das der Schraubenspitze abgewandten Ende zu verstehen, an der zum Befestigen und Verdrehen der Schraube mit einem Werkzeug angegriffen werden kann.

In ähnlicher Weise wie im Stand der Technik kann vorgesehen sein, dass das Festlegemittel in Einschraubrichtung der Schraube einen geringeren Widerstand bietet als in entgegengesetzter Richtung. Es wird dadurch möglich, den Halteabschnitt dadurch in Eingriff mit dem zu befestigenden Bauteil zu bringen, dass die Schraube in den Dübel eingeschraubt wird, bis das Bauteil zur Anlage am Unter grund gelangt und dadurch der Halteabschnitt in das Bauteil eingezogen wird.

Um das Justieren des Abstandes des Bauteils vom Untergrund möglichst einfach zu gestalten, kann vorgesehen sein, dass das Festlegemittel derart ausgebildet ist, dass es beim Verdrehen der Schraube keinen Vorschub in dem zu befestigenden Bauteil erzeugt. Beim Verdrehen der Schraube folgt das Bauteil also der Axialposition der Schraube.

Das Festlegemittel des Halteabschnitts kann beispielsweise mindestens einen Vorsprung aufweisen, gegebenenfalls auch mehrere auf mindestens einer Umfangslinie angeordnete Vorsprünge.

Insbesondere kann es, ähnlich wie im Stand der Technik, mindestens eine umlaufende Rippe aufweisen.

Die Schraube nach der Erfindung kann folgendermaßen hergestellt werden. Ein einziger Drahtabschnitt eines Durchmessers, der etwa dem Ausgangsdurchmesser des Halteabschnitts entspricht, wird durch Fließpressen mit Ausnahme des späteren Halteabschnitts auf einen verringerten Durchmesser reduziert. Anschließend wird, sofern ein spezieller Kopf vorhanden sein soll, dieser Kopf vor- beziehungsweise fertig gepresst. Anschließend wird das Gewinde auf dem Schaftabschnitt und die das Haltemittel bildenden Vorsprünge durch Walzen hergestellt.

Durch die Einstückigkeit der Schraube treten die bei den zweiteiligen Schrauben vorhandenen möglichen Nachteile beim Härten nicht mehr auf.

Weitere Merkmale, Einzelheiten und Vorzüge der Erfindung ergeben sich aus der folgenden Beschreibung einer bevorzugten Ausführungsform der Erfindung, dem Wortlaut der Patentansprüche und der Zusammenfassung, sowie anhand der Zeichnung. Hierbei zeigen:
- Figur 1: einen Drahtabschnitt zum Herstellen der Schraube nach einem ersten Verfahrensschritt;
- Figur 2: eine Seitenansicht der fertigen Schraube nach der Erfindung.

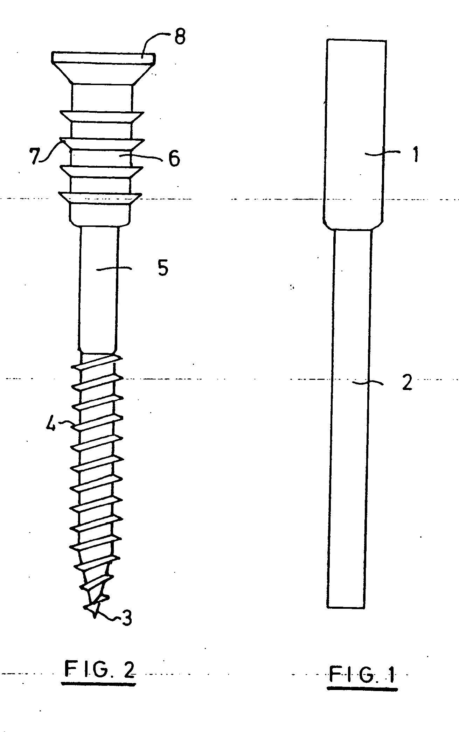

Ausgangspunkt für die Herstellung der in Figur 2 dargestellten Schraube ist ein Drahtabschnitt von beispielsweise 8 Millimetern Durchmesser. In einer ersten Herstellungsstufe wird ein Drahtabschnitt von z.B. 66 Millimetern Länge für die fertige Länge von 160 Millimetern durch Fließpressen auf einen Durchmesser von 4,35 Millimetern reduziert. Diese Reduzierung erfolgt in einer zwei- oder mehstufigen Schraubenpresse. Die Reduzierung erfolgt mit Ausnahme des Schaftabschnitts 1, der den größeren Durchmesser beibehalten soll. Reduziert wird also nur der Schaftabschnitt 2, der das spätere Gewinde aufweisen soll. Das Ergebnis dieser Reduktion ist in Figur 1 dargestellt. Der Abschnitt 1 mit dem größeren Durchmesser wird dann durch Walzen mit Rippen versehenen, während der Abschnitt 2 mit dem reduzierten Durchmesser mit einer Schraubenspitze 3 und einem von der Schraubenspitze 3 ausgehenden Gewinde 4 versehen wird. Dies geschieht durch Walzen. Das Gewinde 4 erstreckt sich nur über einen Teil des Schafts, so dass im Anschluss an das Gewinde 4 ein Schaftabschnitt 5 mit einem zylindrischen Außenumfang entsteht. Daran schließt sich der Halteabschnitt 6 an, der im dargestellten Beispiel Festlegemittel in Form von vier umlaufenden sägezahnförmigen Rippen 7 aufweist. Der Halteabschnitt 6 ist unmittelbar unterhalb des Schraubenkopfes 8 angeordnet, im dargestellten Beispiel einem Senkkopf.

Die dargestellte Schraube kann zur Befestigung beispielsweise einer Latte an einer Unterkonstruktion verwendet werden. Zu diesem Zweck wird die Latte an die spätere Stelle provisorisch gehalten und durch die Latte hindurch das Loch für den Dübel gebohrt. Der Dübel wird durch die Latte hindurch in den Untergrund gesteckt. Anschließend wird die Schraube in den Dübel eingeschraubt, bis der Halteabschnitt 6 auf Grund der schrägen Vorderkanten der Rippen 7 sich in das zu befestigende Bauteil, üblicherweise eine Latte, einzieht. Anschließend kann durch Linksdrehen der Abstand der Latte von dem Untergrund vergrößert werden.

Die Rillen und das Gewinde können in einem Arbeitsgang nacheinander gewalzt werden, d.h. zuerst werden die Rillen und anschließend das Gewinde gewalzt.

Es ist aber ebenfalls möglich, zunächst die Rillen zu walzen und anschließend nach einem Umbau das Gewinde walzen.

## Patentansprüche

1. Verfahren zu Herstellung einer Schraube mit einem Schraubenschaft, einer Schraubenspitze (3), einem Schraubenkopf (8), einem Gewinde (4), das sich über mindestens einen Teil des Schraubenschafts erstreckt, sowie mit einem Halteabschnitt (6) im Bereich des Schraubenkopfs (8), der einen gegenüber dem Schraubenschaft vergrößerten Durchmesser aufweist und einstückig mit Festlegemitteln zum Festlegen in einer Bohrung des zu montierenden Bauteils versehen, mit folgenden Verfahrensschritten:
1.1 ein einziger Drahtabschnitt wird durch Fließpressen mit Ausnahme eines Endabschnitts an seinem einen Ende in seinem Durchmesser reduziert,
1.2 auf den Endabschnitt werden zur Biidung der Festlegemittel Rillen (7) gewalzt,
1.3 auf den Abschnitt verringerten Durchmessers wird ein Gewinde (4) gewalzt.

2. Verfahren nach Anspruch 1, bei dem vor dem Walzen ein Schraubenkopf (8) gepresst wird.

## Claims

1. Process of manufacturing a screw with a screw shaft, a screw tip (3), a screw head (8), a thread (4) that extends over at least part of the screw shaft as well as with a holding section (6) in the area near the screw head (8), which features an enlarged diameter in contrast to the screw shaft and is provided as a single part with a fixing means for inserting it in a hole on the component to be mounted, with the following process steps:
1.1 a single wire section is reduced in its diameter by means of extrusion with exception of one of the end sections on its one end,
1.2 on the end section, flutes (7) are rolled for forming the fixing means,
1.3 on the section with a reduced diameter a thread (4) is rolled.

2. Process according to Claim 1, wherein a screw head (8) is pressed prior to rolling.

## Revendications

1. Procédé de fabrication d'une vis avec une tige de vis, une pointe de vis (3), une tête de vis (8), un filet (4) qui s'étend sur une partie au moins de la tige de vis, ainsi qu'une portion d'arrêt (6) dans la zone de la tête de vis (8), présentant un diamètre supérieur à celui de la tige de vis et formant une pièce avec des moyens de fixation destinés à la fixation dans un trou foré dans l'élément à monter, ledit procédé comportant les étapes suivantes :
1.1 une portion unique de fil est réduite par extrusion à son diamètre, à l'exception d'une portion terminale située en son extrémité,
1.2 des rainures (7) destinées à former les moyens de fixation sont laminées sur la portion terminale,
1.3 un filet (4) est laminé sur la portion de diamètre amoindri.

2. Procédé selon la revendication 1, dans lequel une tête de vis (8) est pressée avant le laminage.
